# EUROPEAN PATENT APPLICATION

(11) **EP 1 695 945 A1**
(43) Date of publication of application: **30.08.2006**
(21) Application number: 04819802.2
(22) Date of filing: 29.11.2004
(51) Int. Cl.: C03B 37/012, C03B 8/04

(54) **PROCESS FOR PRODUCING GLASS PREFORM**

(30) Priority: 01.12.2003 JP 2003401435
(71) Applicant: Shin-Etsu Chemical Company, Ltd., Tokyo 100-0004 (JP)
(72) Inventor: SAKASHITA, Mitsukuni, Kashima-gun, Ibaraki 314-0116 (JP)
(74) Representative: Pfenning, Meinig & Partner GbR
(86) International application number: PCT/JP2004/017714
(87) International publication number: WO 2005/054143

(57) **Abstract**

To decrease the manufacturing cost and the transmission loss of precursor of optical fiber or preform for optical fiber, a method of manufacturing glass base material includes: forming porous glass base material which includes a dopant added core part, and an inner clad layer surrounding said core part and having a lower refractive index than the core part; transforming said porous glass base material into clear glass to be provided as a core ingot; heating and elongating said core ingot in the axial direction in an electric furnace to make a core rod; and forming an outer clad layer surrounding said core rod.

## Description

### TECHNICAL FIELD

The present invention relates to methods of manufacturing glass base material, which is provided to provide preform used for optical fiber having excellent optical properties with high-efficiency and at low cost.

In the designated states which accepts the incorporation by reference, the present application is incorporated the following application by reference to include it as a part of the description of the present application.

Japanese patent application No. 2003-401435, applied on December 1, 2003

### BACKGROUND ART

The following describes an outline of the method of manufacturing preform used for optical fiber, which is precursor of optical fiber.

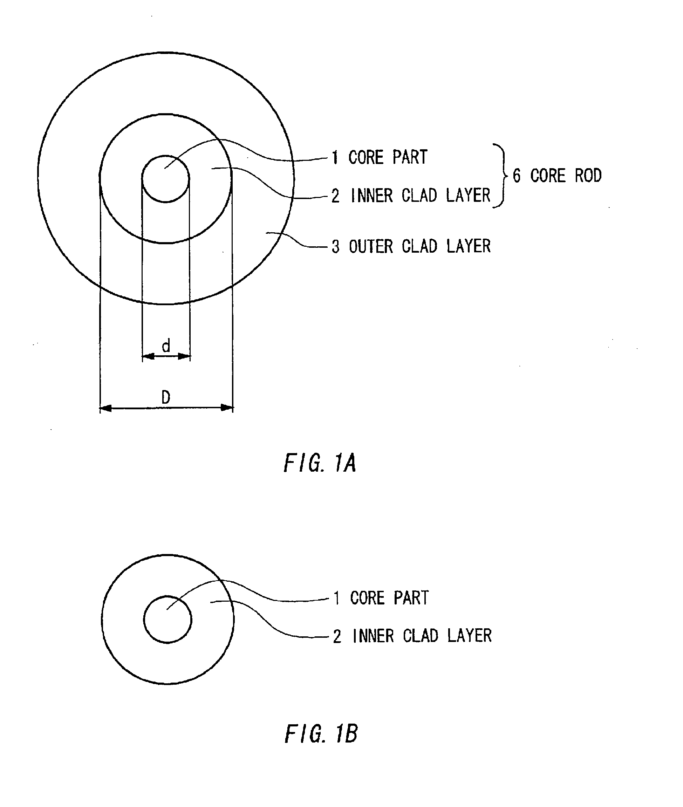

At the first stage, in vapor-phase axial deposition (VAD) process, soot or glass fine particles is deposited and grown in the axial direction to make porous glass base material. The porous glass base material is made to be clear glass, providing a core ingot. As shown in Fig. 1B, the core ingot is comprised of a core part 1 where the refractive index is larger than the surrounding part, and an inner clad layer 2 where the refractive index is smaller than the core part 1.

At the second stage, using a glass lathe, the core ingot is heated with burner flame fueled by oxyhydrogen to be softened, and elongated to make thinner core rod 6.

At the third stage, more soot is deposited on the outer surface of the core rod 6 to form an outer clad layer 3, which has the same refractive index as the inner clad layer 2. The rod is then dehydrated to make clear glass, providing large-size glass base material. See, for example, a Patent document 1. The cross section view of the manufactured large-size glass base material is shown in Fig. 1A.

At the fourth stage, The large-size glass base material is elongated to make it thinner, providing preform used for optical fiber. The fourth stage may be omitted.

In the above first stage, the core part 1 and the inner clad layer 2 are formed at the same time. In the third stage, the outer clad layer 3 is formed on the outer surface, which has the same refractive index as the inner clad layer 2. The outer clad layer 3 is generated much faster at the third stage, compared to the inner clad layer 2 at the first stage. To increase productivity, therefore, it is preferred that the inner clad layer 2 is made thinner, and the outer clad layer 3 is made thicker.

When light enter optical fiber, a part of the incident light leaks to clad layers. The transmission loss of optical fiber depends not only on the purity of the core part but also on the purity of the clad layers including both the inner gladding layer and the outer clad layer. The higher the purity of the clad layers is, the smaller the transmission loss is. For preform as precursor of optical fiber, the inner clad layer, which is closer to the core part, should have a higher purity than the outer clad layer.

It is preferred that the inner clad layer, which has a higher purity, is made thicker to decrease the transmission loss of optical fiber. In this case, however, the ratio of the outer clad layer, which is generated faster, becomes smaller, so the productivity decreases as a whole process of manufacturing preform.

The thickness of the inner clad layer of the core rod should be determined taking into consideration the relationship between the above transmission loss and the productivity.

Patent document 1: Japanese laid-open patent No. 1985-141634

### DISCLOSURE OF THE INVENTION

### PROBLEMS TO BE SOLBED BY THE INVENTION

The outer diameter of a core ingot has been around ϕ 65 mm, but now it tends to be much thicker due to the demand for improving productivity.

To decrease the transmission loss in the drawn optical fiber, the inner clad layer, which has a high purity, needs to be thick. This can be one factor which makes the core ingot thick.

For the above reason, the diameter of the core ingot has become thicker to the extent of ϕ 90 mm recently. Such thick core ingot is very difficult to be processed with heat, for example, when it is drawn with a glass lathe in oxyhydrogen flame.

When it is heated and drawn in burner flame, the heat efficiency is low and the core ingot requires a lot of gas to be softened. In this case, using a lot of gas gives large heat load to the ambient environment. This costs very much, and used devices and operators have to provide a lot of sacrifice. The surface of the core ingot is heated with high temperature for a long time. A part of the core ingot then sublimes, and the core ingot changes significantly its properties.

When the core ingot is heated in oxyhydrogen flame, a lot of moisture or H₂O is generated and always exists around the core ingot at high temperature. OH component coming from the H₂O in the process spreads into the core ingot. The longer the core ingot is heated, and the more gas is used, the more and farther the OH component spreads.

The OH component spreading into the core ingot can increase the transmission loss of drawn optical fiber in a specific wavelength range. The more and farther the OH component spreads into the core ingot, the larger the transmission loss is.

An object of the present invention is to provide a method of manufacturing glass base material having excellent optical properties, in which the core ingot is easily processed with heat, and includes small amount of OH component, which increases the transmission loss.

### MEANS FOR SOLVING THE PROBLEMS

The method of manufacturing glass base material related to the present invention includes; forming porous glass base material which includes a dopant added core part, a (inner) clad layer surrounding the core part and having a lower refractive index than the core part; transforming the porous glass base material into clear glass to be provided as a core ingot; heating and elongating the core ingot in the axial direction in an electric furnace to make a core rod; and forming an outer clad layer surrounding the core rod. Especially, the method is applicable to the core ingot having 70 mm over outer diameter.

Preferably, in the core ingot or the core rod, the ratio of the outer diameter of the core part d to the outer diameter of the inner clad layer D, or d/D is smaller than 0.25, more preferably, smaller than 0.21, and the thickness of the inner clad layer of the core rod is equal to or larger than 1 mm.

The core ingot is elongated in the electric furnace to produce the core rod. The outer clad layer is formed by depositing glass fine particles on the outer surface of the core rod to form a soot layer as the outer clad layer, or welding glass tube on the outer surface of the core rod. The rod is then transformed into clear glass, providing glass base material. For a heat insulator used for the electric furnace, carbon material containing 810 ppm or less ash is preferred to be used.

Right before depositing glass fine particles or welding glass tube on the outer surface of the core rod, the outer surface of the core rod may be etched with fluorine to adjust the surface as an interface between the clad layers.

The above description of the present invention doesn't cite all the features of the present invention. The sub-combinations of these features may also be inventions.

### EFFECT OF THE INVENTION

According to the present invention, glass base material having excellent optical properties is easily provided by making a core ingot which is easily processed with heat and includes small amount of OH component, elongating the core ingot in an electric furnace to make a core rod, and forming an outer clad layer on the outer surface of the core rod. The OH component causes the increase in the transmission loss.

### BRIEF DESCRIPTION OF THE DRAWINGS

Figs. 1A and 1B are schematic views showing the cross-sections of a large-size glass base material and a core ingot, respectively.
Fig. 2 is a chart of the refractive index distribution of the optical fiber.
Fig. 3 is a chart of the intensity distribution of the optical power traveling inside of the optical fiber and having the refractive index distribution shown in Fig. 2.
Fig. 4 is a chart comparing the transmission losses of the optical fibers made in the first and second embodiments.
Fig. 5 is a chart comparing the transmission losses of the optical fibers made in the second and third embodiments.
Fig. 6 is a chart showing the relationship of the ash content in the heat insulator to the transmission loss in the wavelength of 1300 nm.

### BEST MODE FOR CARRYING OUT THE INVENTION

The following description explains the present invention with embodiments. The embodiments described below do not limit the invention claimed herein. All of the combinations described on the embodiments are not essential to the solutions of the present invention.

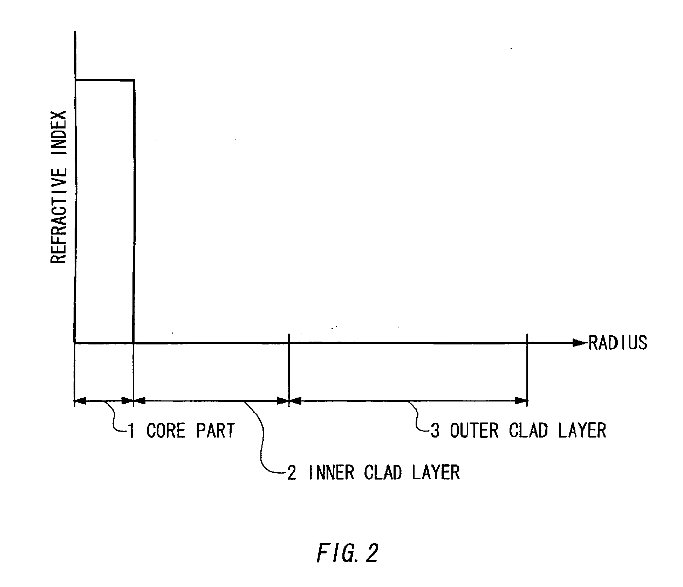

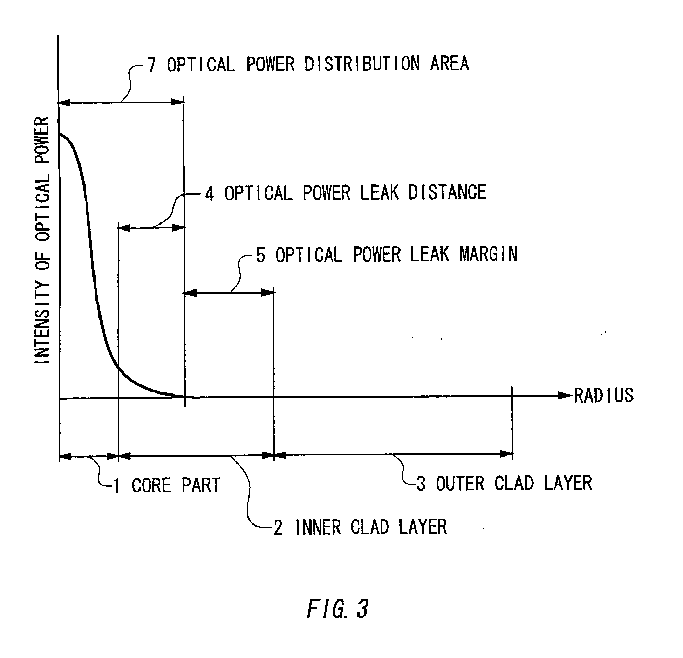

The optical power thrown into the optical fiber leaks in the core part and a part of the optical power also leaks in the inner clad layer 2. See Figs. 2 and 3. If the purity of the inner clad layer 2 is low, the transmission loss is large, which causes the high transmission loss of the optical fiber. Fig. 2 is a chart showing the refractive index distribution of the optical fiber. Fig. 3 is a chart showing the intensity distribution of the optical power having the refractive index distribution shown in Fig. 2.

If the inner clad layer 2 is relatively thin to the diameter of the core part 1, a part of the leaking optical power reaches the outer clad layer 3.

Generally, the purity of the outer clad layer 3 is lower than that of the inner clad layer 2. If the optical power leaks in the outer clad layer 3, therefore, the transmission loss increases very much.

The optical power leak distance 4 beyond the core part 1 to the inner clad layer 2 depends on the ratio to the diameter of the core part. When the d/D of the core ingot is designed, both the permissible transmission loss and the productivity need to be considered.

The ratio of the outer diameter of the core part d to the outer diameter of the inner clad layer D, or d/D is less than 0.25, more preferably, less than 0.21. If d/D is equal to or more than 0.25, the inner clad layer is relatively thin, and the optical power leak badly increases.

For the heat insulator used in the electric furnace, carbon material containing no more than 810 ppm ash is used. If the ash content in the heat insulator is larger than 810 ppm, it adversely affects the glass base material.

### Embodiment 1

Employing the VAD process, soot or glass fine particles was deposited in the axial direction to form a porous core base material. The porous core base material, which includes the core part and the inner clad layer was transformed into a core ingot having the 72 mm outer diameter (D), and the 17.1 mm core part diameter (d). The d/D of the core ingot was 0.238. The core ingot was then heated and elongated along the axial direction in an electric furnace, providing a core rod having the outer diameter of 43.9 mm.

The core rod was formed an outer clad layer, providing glass base material. The glass base material was drawn to make optical fiber. The transmission losses of the optical fiber were 0.34 dB/km in the wavelength of 1300 nm, and 0.355 dB/km in the wavelength 1385 nm.

As a comparative example, the core ingot having the 65 mm outer diameter (D), the 17.1 mm core part diameter (d) was made similarly to the first embodiment. The d/D of the core ingot was 0.263. The core ingot was then heated and elongated in the axial direction, providing a core rod having the 39.7 mm outer diameter.

The core rod was formed an outer clad layer, providing a glass base material. The glass base material was drawn to make optical fiber. The transmission losses of the optical fiber were 0.37 dB/km in the wavelength of 1300 nm, and 0.38 dB/km in the wave length of 1385 nm.

The all results of the first embodiment and the comparative example are shown in Table 1. The same electric furnace and heat insulator were used to obtain the result data.

The core ingot is processed at high temperature of 1600 degrees or more. Because of this, impurities easily come and spread into the inside of the core ingot. As compared the first embodiment to the comparative example, the core part diameters of the core rods are equal, but the inner clad layer of the first embodiment is thicker, which makes impurities harder to reach the optical power distribution area during processing the core ingot. The transmission loss of the first embodiment is smaller than that of the comparative example.

As described above, the optical power leak distance 4 depends on the ratio to the core part diameter. The smaller the diameter of the core part 1 is, the smaller the distance 4 of the optical power leak is. The thickness of the inner clad layer 2 may be decreased as corresponding to the diameter of the core part 1.

During processing the core ingot with heat, impurities come and spread into the core ingot from the outside of the core ingot. Because of this, there needs some margin between the inner clad layer 2 and the optical power leak distance 4. The optical power leak margin 5 shown in Fig. 3 is required to be larger than the distance in which the impurities come and spread. It is preferred that the thickness of the inner clad layer is 1 mm or more. If the thickness is less than 1 mm, the impurities, which come into the core ingot during processing the core ingot with heat, can reach the optical power distribution area 7. This increases the transmission loss undesirably.

### Embodiment 2

Similarly to the first embodiment, a core ingot was made first and processed to make a core rod. In the present embodiment, the inner clad layer is thicker than the first embodiment. Details are shown in Table 1.

If the core rod is used for glass base material for optical fiber, the outer clad layer should be formed thereon. In such case, the OVD process is typically employed. In the OVD process, soot is deposited on the outer surface of the core rod, dehydrated, and transformed into clear glass.

Oxyhydrogen flame is used in the OVD process. The core rod is heated with combustion gas containing a lot of moisture or H₂O in the initial stage of the deposition. The moisture or H₂O is resolved, and the OH component comes into the core rod.

If the OH component exists in the optical power distribution area 7 in the core rod, the transmission loss in a certain wavelength, especially in the wavelength around 1385 nm, increases.

The transmission loss in the wavelength of around 1385 nm had not been concerned, but recently such transmission loss has been regarded as a problem.

To decrease the transmission loss in such wavelength, the inner clad layer has to be thick so that the OH component cannot reach the optical power distribution area 7. This is one of the causes of increasing the diameter of the core ingot.

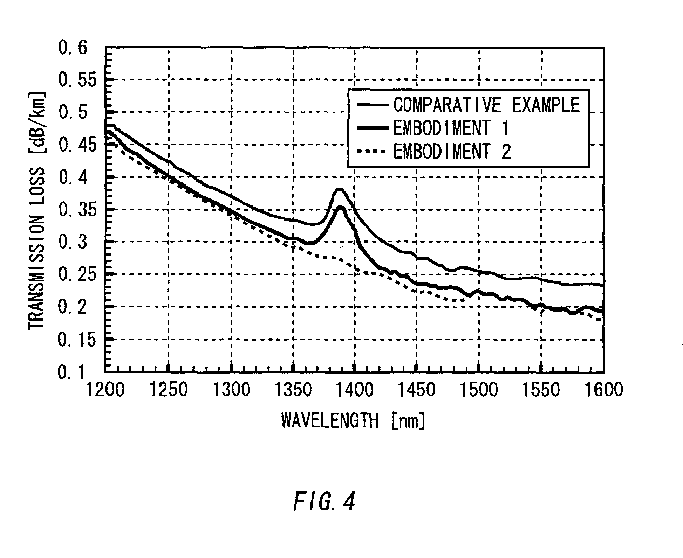

The glass base material made in the second embodiment was drawn to produce optical fibers. The transmission loss of the optical fiber was compared to those of the optical fibers made in the first embodiment and the comparative example, as shown in Fig. 4.

The result data can be assured that the transmission loss in the wavelength of around 1385 nm is decreased very much.

### Embodiment 3

Similarly to the second embodiment, a core ingot was made first and processed to make a core rod. Details are shown in Table 1. This core ingot is an example in which the outer diameters of the core ingot and the core part are larger than the second embodiment, but the d/D is the same as the second embodiment. Also similarly to the second embodiment, the core rod was processed to form glass base material.

The glass base material formed in the third embodiment was drawn to produce optical fibers, and the transmission loss of the optical fiber was compared to that of the optical fiber made in the second embodiment.

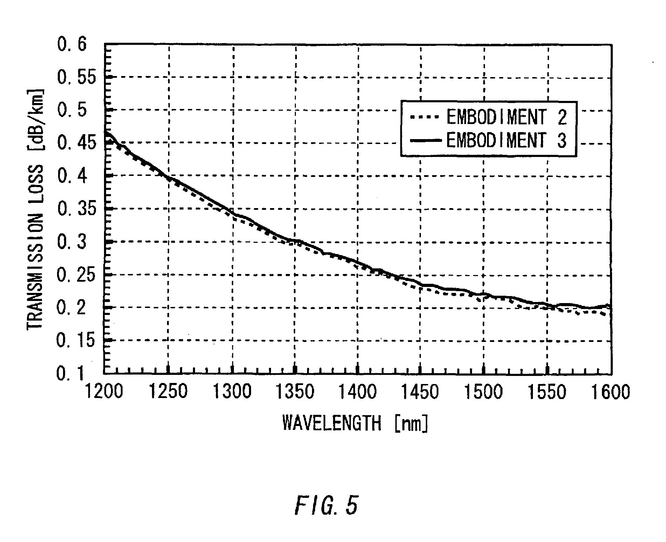

As shown in Fig. 5, there is little difference in over a wide range of the wavelength as compared the optical fibers made in the second and third embodiments.

It is easy to assume that the core ingot made in the third embodiment has a larger outer diameter than the second embodiment, which results a higher productivity than the second embodiment.

The following describes the ash content of the heat insulator of an electric furnace used for elongating the core ingot, and the transmission loss of the optical fiber, which is made of the elongated core ingot.

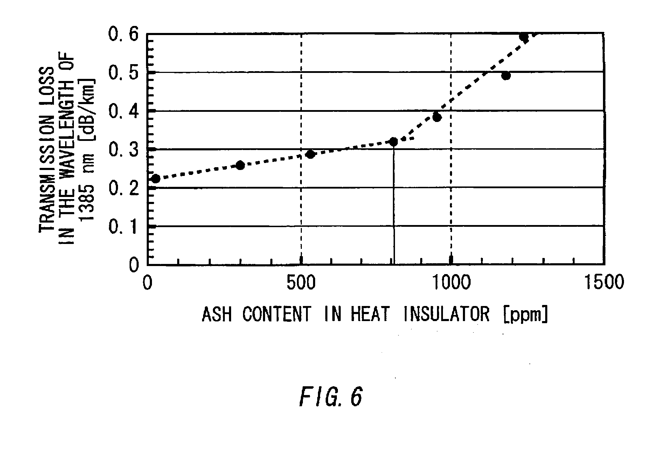

The core ingot made in the third embodiment was used. The core ingot was drawn to make optical fiber, and the optical fiber was measured the transmission loss. The result is shown in Fig. 6 in relation to the ash content of the heat insulator used in the electric furnace. When the transmission loss of the optical fiber is evaluated in the wavelength of 1300 nm, the transmission loss of typically available optical fiber is required to be about 0.35 dB/km or less. If the heat insulator meets the requirement, the insulator has the ash content which falls within the range of 810 PPM or less. See Fig. 6.

**Table 1**

| | Comparative example | Embodiment 1 | Embodiment 2 | Embodiment 3 |
|---|---|---|---|---|
| Diameter of core ingot D (mm) | 65 | 72 | 82 | 105 |
| Diameter of core part d(mm) | 17.1 | 17.1 | 17.2 | 22.1 |
| d/D | 0.263 | 0.238 | 0.210 | 0.210 |
| Diameter of core rod (mm) | 39.7 | 43.9 | 49.7 | 63.7 |
| Diameter of core part in core rod (mm) | 10.4 | 10.4 | 10.4 | 13.4 |
| Thickness of inner clad layer in core rod (mm) | 14.6 | 16.7 | 19.6 | 25.1 |
| Transmission loss (1300nm)[dB/km] | 0.37 | 0.34 | 0.335 | 0.34 |
| Transmission loss (1385nm)[dB/km] | 0.38 | 0.355 | 0.275 | 0.28 |
| Process type of core ingot | Oxyhydrogen flame | Electric furnace | Electric furnace | Electric furnace |

The above description explaining the present invention with the embodiments does not limit the technical scope of the invention to the above description of the embodiments. It is apparent for those in the art that various modifications or improvements can be made to the embodiments described above. It is also apparent from what we claim that other embodiments with such modifications or improvements are included in the technical scope of the present invention.

### INDUSTRIAL APPLICABILITY

The present invention contributes to decrease the manufacturing cost and the transmission loss of precursor of optical fiber or preform for optical fiber.

## Claims

1. A method of manufacturing glass base material, which includes; forming porous glass base material which includes a dopant added core part, and an inner clad layer surrounding said core part and having a lower refractive index than the core part; transforming said porous glass base material into clear glass to be provided as a core ingot; heating and elongating said core ingot in the axial direction in an electric furnace to make a core rod; and forming an outer clad layer surrounding said core rod.

2. The method of manufacturing glass base material according to claim 1, wherein the transformed core ingot has the 70 mm or more outer diameter.

3. The method of manufacturing glass base material according to claim 1 or 2, wherein in the core ingot or the core rod, the ratio of the outer diameter of the core part d to the outer diameter of the inner clad layer D, or d/D is smaller than 0.25.

4. The method of manufacturing glass base material according to claim 1 or 2, wherein the ratio of the outer diameter of the core part d to the outer diameter of the inner clad layer D, or d/D is smaller than 0.21.

5. The method of manufacturing glass base material according to one out of claims 1-4, wherein the thickness of the inner clad layer of the core rod is equal to or larger than 1 mm.

6. The method of manufacturing glass base material according to one out of claims 1-5, wherein for a heat insulator used for the electric furnace is comprised of carbon material containing 810 ppm or less ash.

7. The method of manufacturing glass base material according to one out of claims 1-6, wherein glass tube is welded on the outer surface of the core rod elongated in the electric furnace.

8. The method of manufacturing glass base material according to one out of claims 1-7, wherein glass fine particles are deposited on the outer surface of the core rod, which is elongated in the electric furnace, to form a porous glass body, before the porous glass body is transformed into clear glass.

9. The method of manufacturing glass base material according to one out of claims 1-8, wherein the outer surface of the core rod is etched with fluorine, then glass fine particles are deposited to form a porous glass body, and the porous glass body is transformed into clear glass.

10. Glass base material made with the method of manufacturing glass base material according to one out of claims 1-9. Abstract Provided is the method of manufacturing glass base material having excellent optical properties, in which the core ingot is easily processed with heat, and includes small amount of OH component, which increases the transmission loss. The method of manufacturing glass base material includes; forming porous glass base material which includes a dopant added core part, a (inner) clad layer surrounding the core part and having a lower refractive index than the core part; transforming the porous glass base material into clear glass to be provided as a core ingot; heating and elongating the core ingot in the axial direction in an electric furnace to make a core rod; and forming an outer clad layer surrounding the core rod.
